# EUROPÄISCHE PATENTSCHRIFT

(11) **EP 1 939 514 B1**
(45) Veröffentlichungstag und Bekanntmachung des Hinweises auf die Patenterteilung: **03.11.2010**
(21) Anmeldenummer: 08004994.3
(22) Anmeldetag: 05.01.2006
(51) Int. Cl.: F16L 37/098

(54) **Verbindungsanordnung mit Rohrstutzen zum Verbinden von Fluidaufnahmeteilen**
Connection device with tube supports for connecting fluid intake components
Dispositif de liaison doté de raccords tubulaires destinés à relier des éléments de réception de fluide

(43) Veröffentlichungstag der Anmeldung: 02.07.2008
(62) Teilanmeldung aus: 06000154.2
(73) Patentinhaber: NORMA Germany GmbH, 63477 Maintal (DE)
(72) Erfinder: Kertesz, Janos, 65719 Hofheim (DE); Wachter, Gerhard, 63654 Büdingen (DE)
(74) Vertreter: Knoblauch, Andreas

(56) Entgegenhaltungen:
- CH-A- 379 854
- US-A- 4 214 586
- US-A- 4 441 745
- US-A- 4 632 435
- US-A- 5 048 875
- US-A- 5 527 072
- US-A- 5 735 555
- US-A1- 2002 000 721
- US-A1- 2004 070 205
- US-A1- 2004 135 371

## Beschreibung

Die Erfindung bezieht sich auf eine Verbindungsanordnung mit Rohrstutzen von zu verbindenden Fluidaufnahmeteilen, wie Fluidleitungen und -behältern, wobei die Rohrstutzen jeweils mit einer zu ihrer Mittelachse koaxialen Halterippe versehen sind, hinter der eine Nut ausgebildet ist und die eine zur Mittelachse koaxiale, konische Vorderflanke und eine radiale Rückflanke aufweist, wobei die Vorderflanke der einen Halterippe der Vorderflanke der anderen Halterippe gegenüberliegt und die Rückflanke wenigstens der einen Halterippe die eine Wand der angrenzenden Nut bildet, und mit einem über mehr als 240° weitgehend kreisförmig gebogenen Federband aus Stahl, dessen axiale Enden nach innen gerichtete Flansche mit weitgehend kreisbogenförmiger, zur Mittelachse koaxialer Innenkante aufweisen, die hinter den Halterippen eingreifen und wenigstens auf der den Umfangsenden des Federbandes gegenüberliegenden Seite des Federbandes unterbrochen sind, und wobei die Rohrstutzen teilweise ineinandergesteckt sind und die ineinandergesteckten Teile der Rohrstutzen durch wenigstens einen Dichtring gegeneinander abgedichtet sind.

Eine ähnliche Verbindungsanordnung ist z.B. aus US-A-4 214 586 bekannt.

Ferner bezieht sich die Erfindung auf eine Verbindungsanordnung mit Rohrstutzen zu verbindender Fluidaufnahmeteile, wie Fluidleitungen oder -behälter, wobei die Rohrstutzen jeweils mit einer zu ihrer Mittelachse koaxialen Halterippe mit radialer Rückflanke versehen sind, wobei die Rückflanke wenigstens einer der Halterippen eine Nut begrenzt, und mit einem über wenigstens 240° weitgehend kreisförmig gebogenen Federband aus Stahl, dessen axiale Enden nach innen gerichtete Flansche mit weitgehend kreisbogenförmiger, zur Mittelachse koaxialer Innenkante aufweisen, die hinter den Halterippen eingreifen und wenigstens auf der den Umfangsenden des Federbandes gegenüberliegenden Seite des Federbandes unterbrochen sind, und wobei die Rohrstutzen teilweise ineinandergesteckt sind und die ineinandergesteckten Teile der Rohrstutzen durch wenigstens einen Dichtring gegeneinander abgedichtet sind.

Bei den vorstehend geschilderten Verbindungsanordnungen wird das Federband unter Aufweitung radial auf die Halterippen der Rohrstutzen aufgesetzt. Die Rohrstutzen lassen sich jedoch nicht axial, wie bei einer Steckkupplung, in das Federband einstecken, weil sich dabei einer der Flansche axial in der Nut hinter der einen Halterippe so weit verschiebt, bis der andere Flansch an dieser Halterippe anliegt und kein freier Raum mehr zur Aufnahme der anderen Halterippe zwischen den Flanschen verbleibt.

Andere bekannte Verbindungsanordnungen mit einem Federband, z.B. das aus der DE 198 18 562 C1 oder der DE 198 00 283 C1 bekannte Federband, eine sogenannte "Profilschelle", dienen zum Verbinden von Rohren, die an ihren Enden mit Halterippen in Form von Flanschen versehen sind, deren den Enden abgekehrte Flanken konisch sind. Das Federband besteht aus Stahlblech. Seine seitlichen Ränder sind zur Ausbildung der Flansche um einen Winkel von weniger als 90° nach innen umgebogen. Der Winkel entspricht dem Konuswinkel der Flansche an den Rohrenden. Ein Schlitz zwischen den Enden des Federbandes ist durch einen Rast- oder Gelenkverschluß überbrückbar. Das dem Schlitz gegenüberliegende Gelenk ist durch das Material des Federbandes im Bereich einer Unterbrechung der Flansche des Federbandes nach Art eines "Filmgelenks" oder durch einen weiteren Gelenkverschluß gebildet. Beim Verbinden der Rohre wird das Federband bei geöffnetem Verschluß (oder geöffneten Verschlüssen) um die Flansche der Rohre herumgelegt und der bzw. jeder Verschluß wieder geschlossen. Dabei legen sich die Flansche des Federbandes an den konischen Flanken der Rohrflansche an, so daß die Rohrenden zusammengezogen werden. Das Stahlblech des Federbandes ist zwar bei der Ausführung mit "Filmgelenk" (DE 198 18 562 C1) im Bereich des Gelenks biegsam, übt jedoch keine radiale Klemmkraft auf die Rohre aus. Die Klemmkraft beruht allein auf der Spannkraft des Verschlusses bzw. der Verschlüsse. Eine Verbindungsanordnung mit einer Profilschelle ist daher nicht als einfach zu schließende Steckkupplung geeignet, bei der die Rohrenden lediglich axial in die Profilschelle eingesteckt zu werden brauchen und die Flansche beim Einstecken hinter den Halterippen auf den Rohren einrasten, um die Verbindung herzustellen. Die Herstellung des Federbandes mit einem Rastverschluß, der einstückig mit dem Federband ausgebildet ist, erfordert aufwendige Stanz- und Biegewerkzeuge. Die Herstellung des Federbandes mit einem Gelenkverschluß erfordert zusätzlich dessen Ausbildung und Montage.

Bei einer Steckkupplung, wie sie aus der EP 1 378 701 A1 bekannt ist, besteht die Kupplung aus elastischem Kunststoff. Sie hat zwei ovale Ringe, die durch zwei sich diametral gegenüberliegende Stege verbunden sind. Die Ringe sind innen mit Rastnasen versehen. Beim Einstecken der Rohrenden in die Ringe werden die Ringe elastisch durch Halterippen auf Endabschnitten der Rohre aufgeweitet, bis die Rastnasen der Ringe hinter den Halterippen einrasten. Im eingekuppelten Zustand verbleibt zwischen den Ringbereichen mit dem kleineren Krümmungsradius und den Rohren ein Spielraum, der ein radiales Zusammenwirken der Ringe zum Entkuppeln ermöglicht. Das Material dieser Kupplung ist auf Kunststoff beschränkt. Zur Herstellung der Kupplung ist ein aufwendiges Formwerkzeug erforderlich. Wegen der weiten Zwischenräume zwischen den Stegen und dem Entkupplungsspielraum zwischen den Ringen und den Rohren besteht die Möglichkeit, daß die in die Kupplung eingeführten Endabschnitte der Rohre verschmutzen. Dies kann ein wiederholtes Ein- und Auskuppeln erschweren.

Der Erfindung liegt die Aufgabe zugrunde, eine Verbindungsanordnung der eingangs genannten Arten anzugeben, die einfacher handhabbar und herstellbar ist und widerstandsfähiger ist.

Diese Aufgabe wird bei den beiden eingangs geschilderten Verbindungsanordnungen dadurch gelöst, daß das Federband durch einen Steg mit einer zum Festklemmen einer Fluidleitung auf einem der Rohrstutzen dienenden Schlauchschelle verbunden ist.

Dies hat den Vorteil, daß das Federband gleichzeitig zur Vormontage der Schlauchschelle auf dem Rohrstutzen dienen kann, bevor die Fluidleitung mit der Schlauchschelle auf dem Rohrstutzen festgeklemmt wird.

Eine erfindungsgemäße Lösung der vorstehend geschilderten Aufgabe bei einer Verbindungsanordnung mit Rohrstutzen von zu verbindenden Fluidaufnahmeteilen, wie Fluidleitungen und -behältern, wobei die Rohrstutzen jeweils mit einer zu ihrer Mittelachse koaxialen Halterippe mit radialer Rückflanke versehen sind, wobei die Rückflanke wenigstens einer der Halterippen eine Nut begrenzt, und mit einem über wenigstens 240° weitgehend kreisförmig gebogenen Federband aus Stahl, das nach innen gerichtete Vorsprünge mit radialen Flächen aufweist, die an den Rückflanken der Halterippen anliegen, besteht darin, daß die Vorsprünge aus dem Federband herausgedrückte Rastnasen sind und daß das Federband korrosionsfest ist.

Diese Rastnasen sind besonders biegesteif ausgebildet, da sie jeweils an dem einen Rand von in ihrer Länge begrenzten Umfangsschlitzen herausgedrückt sind.

Die Umfangsschlitze sind Langlöcher mit jeweils einer im ebenen Zustand des Federbandes quer zum Langloch gerichteten Lasche, deren Rand in dem aus dem Federband herausgedrückten Zustand des Vorsprungs die radiale Fläche zur Anlage an der Rückflanke jeweils einer der Halterippen bildet.

Die Rohrstutzen weisen Kunststoff auf. Sie lassen sich daher auf einfache Weise formen. Durch entsprechende Verstärkungszusätze, wie Glasfasern, können sie auch hohen Kräften, insbesondere Scherkräften im Bereich der Halterippen, standhalten.

Sie enthalten vorzugsweise einen elektrisch leitfähigen Zusatz, so daß die Verbindungsanordnung durchgehend über das aus Metall bestehende Federband zur Vermeidung einer elektrostatischen Aufladung elektrisch leitfähig ist, was besonders dann von Vorteil ist, wenn auch die Fluidaufnahmeteile, wie Fluidleitungen oder Fluidbehälter, elektrisch leitfähig sind.

Die Vorderflanken der Halterippen kann mit der Mittelachse einen kleineren Winkel als 50° einschließen, wobei der Radius des kleinsten Umkreises der Vorderflanken der Halterippen kleiner als der Innenradius der Flansche des Federbandes ist, die axiale Breite der Flansche der Weite der sie aufnehmenden Nut entspricht und das Federband korrosionsfest ist.

Die Flansche des Federbandes können jeweils einen radial nach innen und einen schräg nach außen gebogenen Abschnitt haben, wobei der schräge Abschnitt mit der Mittelachse des jeweiligen Rohrstutzens einen Winkel im Bereich von 10° bis 60° einschließt, der Durchmesser der Innenkante des äußeren Randes des schrägen Abschnitts größer als der kleinste Außendurchmesser der Halterippen ist, die axiale Breite wenigstens des einen Flansches der Weite der ihn aufnehmenden Nut entspricht und das Federband korrosionsfest ist.

Bei diesen beiden Lösungen kann die Verbindungsanordnung einfach wie eine Steckkupplung gehandhabt werden, um die Rohrstutzen und damit verbundene Fluidaufnahmeteile, wie Fluidleitungen und Fluidbehälter, insbesondere Kraftstofftanks und Kühler von Kraftfahrzeugen, zu verbinden. Ferner kann das Federband an einem der Rohrstutzen vormontiert sein. Das Federband ist nicht nur korrosionsfest, sondern auch hitzebeständig, so daß die Verbindungsanordnung auch für Rohrleitungen, wie Abgasrohre, durch die ein sehr heißes Fluid geleitet wird, geeignet ist.

Während in einem Fall die Halterippen auf den Rohrstutzen eine konische Vorderflanke aufweisen, kann die Vorderflanke wenigstens einer der Halterippen im anderen Fall radial sein. Dementsprechend können die Halterippen sehr schmal ausgebildet sein, so daß auch das Federband entsprechend schmaler und weniger materialaufwendig sein kann.

Die nachstehend geschilderten Weiterbildungen beziehen sich auf beide Ausgestaltungen, soweit nichts anderes erwähnt ist.

So kann eine Ausgestaltung darin bestehen, daß die an dem einen axialen Ende des Federbandes vorgesehenen Flansche in Umfangsrichtung des Federbandes kürzer als die an dem anderen Ende des Federbandes vorgesehenen Flansche sind. Dies erleichtert das Entkuppeln des einen Rohrstutzens, da das Federband zum Entkuppeln nur so weit gespreizt bzw. aufgeweitet zu werden braucht, bis der eine Rohrstutzen zwischen den Flanschen am einen axialen Ende des Federbandes herausgezogen werden kann, während die Flansche am anderen axialen Ende des Federbandes weiterhin hinter der Halterippe des anderen Rohrstutzens eingerastet bleiben können.

Das gleiche kann auch dadurch erreicht werden, daß die an dem einen axialen Ende des Federbandes vorgesehenen Flansche in Radialrichtung schmaler als die am anderen Ende des Federbandes vorgesehenen Flansche sind.

Eine andere Möglichkeit, um dies zu erreichen, besteht darin, daß der Außendurchmesser der einen Halterippe größer als der der anderen Halterippe ist.

Ferner kann dafür gesorgt sein, daß an wenigstens einem axialen Ende des Federbandes wenigstens einer der Flansche mit einem radialen Ausschnitt zur Einführung jeweils eines radialen Vorsprungs an dem in dieses Ende eingeführten Rohrstutzen versehen ist. Durch diese Ausgestaltung ist es möglich, die Rohrstutzen nur in einer vorbestimmten relativen Drehwinkellage miteinander zu verbinden, wenn dies erwünscht ist.

Die Umfangsenden des Federbandes können einen axialen Schlitz mit einer Weite von 0 bis 2 mm begrenzen. Dies ermöglicht die Einführung eines einfachen Spreizwerkzeugs, z.B. die Klinge eines Schraubendrehers, um das Federband zum Entkuppeln wenigstens des einen Rohrstutzens hinreichend weit zu spreizen bzw. aufzuweiten.

Zusätzlich können die Umfangsenden des Federbandes mit Aussparungen zur Einführung eines Spreizwerkzeugs, z.B. einer Spreizzange, versehen sein.

Alternativ oder zusätzlich zu den Aussparungen können dem Schlitz benachbarte Umfangsendabschnitte des Federbandes mit Löchern zur Einführung eines Spreizwerkzeugs versehen sein.

Statt eines Schlitzes zwischen den Umfangsenden des Federbandes kann auch vorgesehen sein, daß sich Umfangsendabschnitte des Federbandes überlappen. Dadurch wird verhindert, daß in den Raum innerhalb des Federbandes Verunreinigungen oder korrosive Fluide eindringen können.

Dies kann auch weitgehend dadurch erreicht werden, daß sich der eine Umfangsendabschnitt des Federbandes mit einem schmaleren Endstück in einen Umfangsschlitz des anderen Umfangsendabschnitts des Federbandes erstreckt.

Die Umfangsendabschnitte des Federbandes können ferner jeweils mit einem von der Außenseite des Federbandes weg gerichteten Vorsprung zum Ansetzen eines Spreizwerkzeugs versehen sein.

Diese Vorsprünge können auf einfache Weise durch umgebogene Umfangsendabschnitte des Federbandes gebildet sein.

Insbesondere können die Umfangsendabschnitte des Federbandes radiale, ebene oder abgewinkelte Spreizbacken oder hohzylindrisch sein.

Zusätzlich können auf der Außenseite von Umfangsendabschnitten des Federbandes Abdeckungen aus Kunststoff befestigt sein. Diese Abdeckungen schützen das Federband, insbesondere wenn es mit einer korrosionsfesten Schutzschicht versehen ist, vor Stoßbelastungen, wie Steinschlag im Motorraum oder Abgasbereich eines Kraftfahrzeugs.

Die Abdeckungen können auf einfache Weise formschlüssig an den Umfangsendabschnitten des Federbandes befestigt sein.

Diese Art der Befestigung kann dadurch erreicht werden, daß radiale Vorsprünge der Abdeckungen in Löcher der Umfangsendabschnitte des Federbandes eingerastet sind.

Außerdem können die Abdeckungen die Flansche des Federbandes mit radialen Flanschen abdecken, um auch die Flansche vor Stoßbelastungen zu schützen.

Es kann ferner dafür gesorgt sein, daß der eine Rohrstutzen von einer Hülse mit einem axialen, Umfangsendabschnitte des Federbandes freilassenden Schlitz in einem radialen, der maximal erforderlichen Aufspreizweite des Federbandes entsprechenden Abstand umgeben ist. Diese Hülse sorgt nicht nur für einen Schutz des Federbandes und gegebenenfalls der zusätzlich vorgesehenen Abdeckung, sondern auch für eine Aufspreizbegrenzung des Federbandes, um es nicht übermäßig zu spreizen oder aufzuweiten, insbesondere nicht so weit, daß beide Rohrstutzen entkuppelt werden können, wenn nur ein Rohrstutzen entkuppelt werden und das Federband auf dem anderen Rohrstutzen montiert bleiben soll.

Die Hülse kann auf einfache Weise im Schnappsitz radial auf dem einen Rohrstutzen befestigt sein. Sie kann dann nicht nur von vornherein auf dem einen Rohrstutzen befestigt sein, sondern auch nachträglich befestigt werden.

Die Flansche können mit dem sie axial verbindenden Bereich des Federbandes einen Winkel im Bereich von 15° bis 90° einschließen. Ein Winkel von 90° hat den Vorteil, daß der Abstand der Halterippen von einer gegenüberliegenden Nuten- oder Gehäusewand geringer als bei einem Winkel von weniger als 90° gehalten werden kann, was bedeutet, daß das Federband schmaler und die Rohrstutzen entsprechend kürzer ausgebildet sein können als bei einem Winkel von weniger als 90°. Ein kleinerer Winkel als 90° hat dagegen den Vorteil, daß die Flansche eine höhere Steifigkeit oder einen größeren Widerstand gegen ein axiales Umbiegen bei axialer Belastung des Federbandes durch den Fluiddruck im Inneren der Rohrstutzen bieten.

Die Erfindung und ihre Weiterbildungen werden nachstehend anhand der beiliegenden Zeichnungen bevorzugter Ausführungsbeispiele und Abwandlungen dieser Ausführungsbeispiele näher beschrieben. Darin stellen dar:
- Fig. 1: einen Axialschnitt durch eine erste Verbindungsanordnung mit zwei ineinandergesteckten Rohrstutzen, die durch ein Federband aus Metall mit radialen Flanschen an seinen radialen Enden zusammengehalten sind, wobei das Federband von einer Schutzhülse umgeben ist,
- Fig. 2: einen Ausschnitt einer Abwandlung der Verbindungsanordnung nach Fig. 1, bei der die Schutzhülse weggelassen und die Außendurchmesser von Halterippen der Rohrstutzen unterschiedlich sind,
- Fig. 3: einen Ausschnitt einer gegenüber der Verbindungsanordnung nach Fig. 1 abgewandelten Verbindungsanordnung, bei der der eine Flansch des Federbandes radial kürzer als der andere ist,
- Fig. 4: eine perspektivische Darstellung eines Federbandes der Verbindungsanordnung nach Fig. 1,
- Fig. 5: eine perspektivische Darstellung eines gegenüber dem nach Fig. 4 etwas abgewandelten Federbandes,
- Fig. 6: eine Axialansicht des Federbandes nach Fig. 5,
- Fig. 7: eine perspektivische Darstellung eines weiteren gegenüber dem nach Fig. 4 etwas abgewandelten Federbandes,
- Fig. 8: eine Axialansicht eines weiteren gegenüber dem nach Fig. 4 etwas abgewandelten Federbandes,
- Fig. 9: eine Axialansicht eines weiteren gegenüber dem nach Fig. 8 etwas abgewandelten Federbandes,
- Fig. 10: eine perspektivische Darstellung eines weiteren gegenüber dem nach Fig. 1 etwas abgewandelten Federbandes,
- Fig. 11: einen Axialschnitt des Federbandes nach Fig. 10,
- Fig. 12: eine perspektivische Darstellung eines weiteren gegenüber dem nach Fig. 1 abgewandelten Federbandes,
- Fig. 13: einen Axialschnitt des Federbandes nach Fig. 12,
- Fig. 14: eine perspektivische Darstellung eines gegenüber dem nach Fig. 12 etwas abgewandelten Federbandes,
- Fig. 15: einen Axialschnitt des Federbandes nach Fig. 14,
- Fig. 16: eine perspektivische Darstellung eines gegenüber den vorhergehenden Federbändern etwas abgewandelten Federbandes,
- Fig. 17: eine perspektivische Darstellung eines weiteren gegenüber dem nach Fig. 4 etwas abgewandelten Federbandes,
- Fig. 18: einen Axialschnitt durch einen Teil der Verbindungsanordnung nach Fig. 1, bei der auf dem einen Rohrstutzen eine mit dem Federband verbundene Schlauchschelle in Form einer Schneckengewindeschelle eine Fluidleitung auf dem Rohrstutzen festklemmt,
- Fig. 19: eine perspektivische Ansicht des in Fig. 18 dargestellten Teils der Verbindungsanordnung,
- Fig. 20: einen anderen Axialschnitt durch den in Fig. 18 dargestellten Teil der Verbindungsanordnung,
- Fig. 21: eine andere perspektivische Darstellung des in Fig. 18 dargestellten Teils der Verbindungsanordnung,
- Fig. 22 bis 25: die gleichen Ansichten wie die nach den Fig. 18 bis 21, wobei die Schneckengewindeschelle durch eine Federbandschelle ersetzt ist,
- Fig. 26: einen Axialschnitt durch eine gegenüber der nach Fig. 1 etwas abgewandelten Verbindungsanordnung, bei der die Flansche des Federbandes jeweils einen radial nach innen und einen schräg nach außen gebogenen Abschnitt haben,
- Fig. 27: eine perspektivische Ansicht der Verbindungsanordnung nach Fig. 26 ohne den einen Rohrstutzen,
- Fig. 28: eine Abwandlung der Verbindungsanordnung nach Fig. 26,
- Fig. 29: einen Axialschnitt durch ein Federband, das gegenüber dem nach Fig. 26 etwas abgewandelt ist,
- Fig. 30: eine perspektivische Darstellung des erfindungsgemäßen Federbandes,
- Fig. 31: einen Axialschnitt durch das Federband nach Fig. 30,
- Fig. 32: einen Axialschnitt durch eine gegenüber dem vorhergehenden abgewandelte Verbindungsanordnung mit einem Federband gemäß den Fig. 30 und 31 und
- Fig. 33: eine perspektivische Darstellung eines gegenüber dem nach Fig. 30 etwas abgewandelten Federbandes.

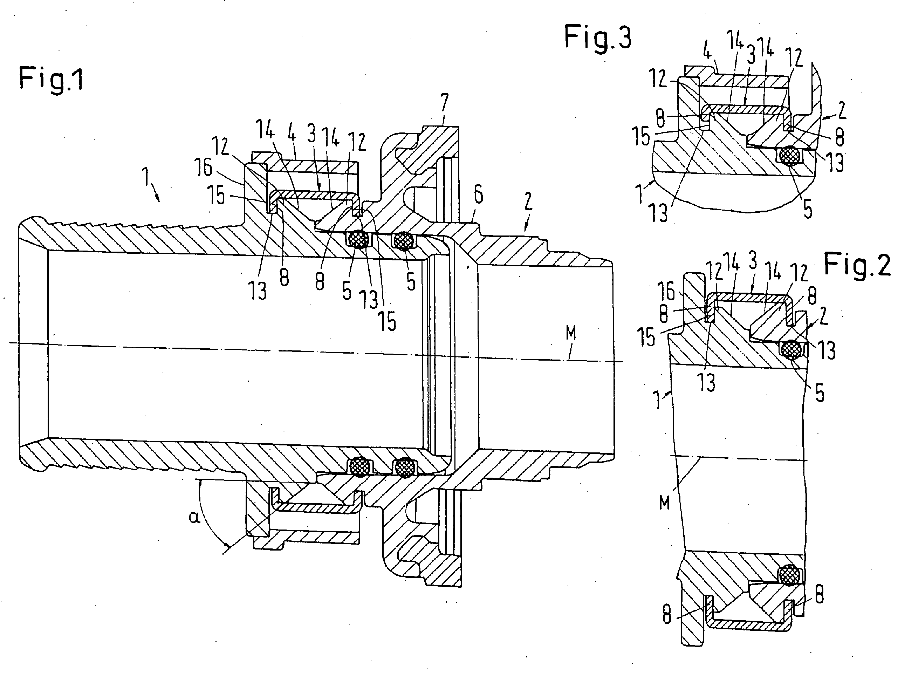

Die Verbindungsanordnung nach Fig. 1 besteht aus zwei teilweise ineinandergesteckten Rohrstutzen 1 und 2, einem die Rohrstutzen 1 und 2 verbindenden Federband 3, einer Hülse 4 und zwei Dichtringen 5.

Die Rohrstutzen weisen thermoplastischen Kunststoff mit Verstärkungsmaterial, wie Glasfasern, und einem elektrisch leitfähigen Zusatz auf. Der Rohrstutzen 2 besteht aus zwei Teilen 6 und 7, die formschlüssig und durch eine Schmelzverbindung miteinander verbunden sind. Der Teil 6 bildet eine Diffusionsbarriere, die vorzugsweise durch ein Polyamid gebildet ist. Der Teil 7 enthält dagegen Polyethylen, das keine Diffusionsbarriere bildet, aber mit einem entsprechenden Material, wie hochdichtes Polyethylen eines Kraftstoffbehälters, verschmelzbar ist. Um den Rohrstutzen 2 mit dem Kraftstoffbehälter zu verbinden, wird der Teil 7 mit dem Rand der Einfüllöffnung des Kraftstoffbehälters verschmolzen.

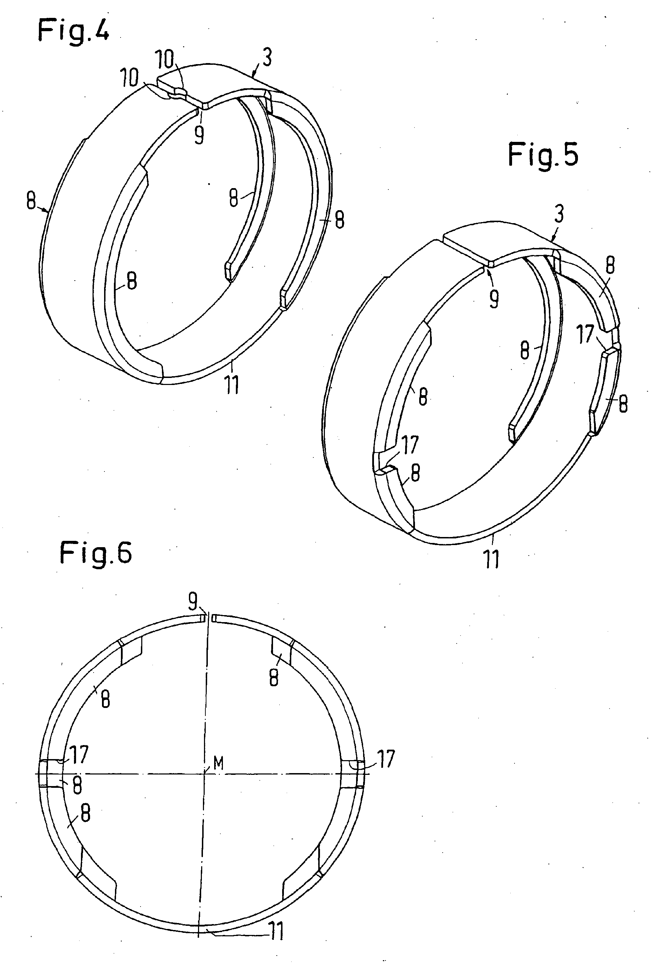

Das Federband 3 besteht aus Metall, wie Federstahl, und ist korrosionsfest. Zu diesem Zweck kann es entweder aus korrosionsfestem, insbesondere rostfreiem Stahl oder aus Metall bestehen, das mit einem korrosionsfesten Material beschichtet ist. Das Federband 3 hat an seinen axialen Enden radial nach innen umgebogene Flansche 8, wie sie auch in Fig. 4 dargestellt sind, und einen axialen Schlitz 9. Die Ränder des axialen Schlitzes bzw. die Umfangsenden des Federbandes 3 sind mit sich gegenüberliegenden Aussparungen 10 zur Einführung eines (nicht dargestellten) Spreizwerkzeugs, hier einer Spreizzange, versehen. In einem dem Schlitz diametral gegenüberliegenden Bereich des Federbandes 3 sind die Flansche unterbrochen, so daß das Federband 3 in diesem Bereich ein federndes Gelenk 11 bildet.

Nach Fig. 1 sind die Stutzen 1 und 2 jeweils mit einer zu ihrer Mittelachse M koaxialen Halterippe 12 versehen, hinter der eine umlaufende Nut 13 ausgebildet ist und die eine zur Mittelachse M koaxiale, konische Vorderflanke 14 und eine radiale Rückflanke 15 aufweist.

Die Rohrstutzen 1, 2 und damit die mit ihnen verbundenen Fluidaufnahmeteile werden in der Weise miteinander verbunden, daß zunächst einer der Rohrstutzen 1, 2 mit seiner konischen Flanke 14 voran unter den Flanschen 8 am einen axialen Ende hinweg, unter Aufspreizung des Federbandes, so weit in dieses eingeführt wird, bis diese Flansche 8 hinter der Halterippe 2 durch die Federkraft des Federbandes 3 in die Nut 13 eingerastet sind. Danach wird der andere der beiden Rohrstutzen 1, 2 mit der Vorderflanke 14 seiner Halterippe 12 voran unter erneuter Aufspreizung des Federbandes 3 so weit in das Federband 3 eingeführt, bis die an dem anderen axialen Ende des Federbandes 3 vorgesehenen Flansche 8 hinter dieser Halterippe 12 in die Nut 13 eingerastet sind. Die Weite der Nuten 13 entspricht etwa der axialen Breite der Flansche 8. Daher kann das Federband 3, während die Rohrstutzen 1, 2 unter dem Federband 3 zusammengesteckt werden, durch die Vorderflanke 14 der Halterippe 12 des zuletzt eingeführten Rohrstutzens 1 oder 2 nicht axial verschoben werden. Im zusammengesteckten Zustand der Rohrstutzen 1, 2 liegen die Vorderflanken 14 der Halterippen 12 nahe beieinander, so daß das Federband 3 in axialer Richtung relativ schmal und nur etwas breiter als die Gesamtbreite beider Halterippen 12 ist. Die Vorderflanken 14 der Halterippen schließen mit der Mittelachse M oder Längsrichtung der Rohrstutzen einen Winkel α ein, der kleiner als 50° ist, so daß sich die Rohrstutzen 1, 2 leicht in das Federband 3 einstecken lassen. Zusätzlich ist auch der Radius des kleinsten Umkreises der Vorderflanken 14 der Halterippen 12 kleiner als der Innenradius der Flansche 8 des Federbandes 3, so daß die Vorderflanken 14 beim Zusammenstecken der Rohre 1, 2 mit den radial inneren Rändern der Flansche 8 zusammentreffen und diese Ränder auf den Vorderflanken 14 radial nach außen gleiten können.

Die Hülse 4 hat ebenfalls einen (nicht dargestellten) axial durchgehenden Schlitz und ist federelastisch, wobei sie aus Federstahl oder Kunststoff bestehen kann. Sie ist auf einem zumindest teilweise umlaufenden, die eine Nut 13 begrenzenden Flansch 16 radial aufgeschnappt, wobei sie den Flansch 16 um etwas mehr als 180° umschlingt. Gleichzeitig dient die Hülse 4 zur Begrenzung des maximalen Aufspreizweges des Federbandes 3, wodurch sie gleichzeitig sicherstellt, daß das Federband 3 symmetrisch in Bezug auf die Mittelachse M aufgeweitet wird.

Nach Fig. 4 erstrecken sich die Flansche 8 in Umfangsrichtung nur so weit, daß das Federband 3 nur so weit zum Entkuppeln oder Trennen der Rohrstutzen 1, 2 aufgespreizt zu werden braucht, daß die Halterippen 12 gerade unter den Flanschen 8 hinweg aus dem Federband 3 herausgezogen werden können.

Wenn es erwünscht ist, nur einen Rohrstutzen zu entkuppeln, z.B. den Rohrstutzen 1, und das Federband 3 auf dem anderen Rohrstutzen vormontiert zu lassen, kann beispielsweise der Außendurchmesser der Halterippe 12 desjenigen Rohrstutzens, beispielsweise des Rohrstutzens 2, auf dem das Federband 3 vormontiert bleiben soll, etwas größer als der Außendurchmesser der Halterippe 12 des anderen Rohrstutzens (oder der Außendurchmesser der Halterippe 12 des Rohrstutzens 1 kleiner als der Außendurchmesser der Halterippe 12 des Rohrstutzens 2) gewählt werden, wie es in Fig. 2 dargestellt ist, so daß durch entsprechend geringe Aufspreizung des Federbandes 3 nur der eine Rohrstutzen, hier der Rohrstutzen 1, entkuppelt werden kann.

Nach Fig. 3 kann die gleiche Funktion auch dadurch erreicht werden, daß bei Halterippen 12 mit gleichen Außendurchmessern die Flansche 8 radial kürzer (mit geringerer radialer Höhe), z.B. die in Fig. 3 links dargestellten Flansche 8, als die anderen Flansche 8 gewählt werden.

Eine vierte Möglichkeit besteht nach den Fig. 5 und 6 darin, daß die an dem einen axialen Ende des Federbandes 3 ausgebildeten Flansche 8 in Umfangsrichtung kürzer als die ihnen axial am anderen axialen Ende des Federbandes 3 gegenüberliegenden Flansche 8 ausgebildet sind. Die in Umfangsrichtung kürzeren Flansche 8 erstrecken sich daher in ihrer Nut 13 nur über einen geringeren Umschlingungswinkel, so daß sie beim Aufspreizen des Federbandes 3, um die Rohrstutzen 1, 2 zu entkuppeln, zuerst hinter der diese Nut 13 begrenzenden Halterippe 12 ausrasten und der betreffende Rohrstutzen allein entkuppelt werden kann, wenn das Federband 3 nicht weiter aufgespreizt wird.

Wie die Fig. 5 und 6 ferner zeigen, können die an dem einen axialen Ende des Federbandes 3 ausgebildeten Flansche 8 oder nur einer der Flansche mit einem schmalen radialen Ausschnitt 17 versehen sein, in die jeweils ein (nicht dargestellter) radialer Vorsprung an dem in dieses Ende eingeführten Rohrstutzen eingeführt werden kann. Dadurch wird erreicht, daß das ansonsten auf beiden Rohrstutzen 1, 2 drehbare Federband 3 nur relativ zu einem der beiden Rohrstutzen verdreht werden kann, wenn dies erwünscht ist, obwohl die Verdrehbarkeit den Vorteil hat, daß der Schlitz 9 jeweils in diejenige Lage relativ zu den Rohrstutzen 1, 2 gedreht werden kann, in der der Schlitz 9 zum Aufspreizen, d.h. zum Einführen eines Spreizwerkzeugs, leicht zugänglich ist.

Während bei der Ausführungsform des Federbandes 3 nach Fig. 4 die Umfangsenden des Federbandes, wenn es um die Rohrstutzen herum unter seiner Federkraft anliegt, aneinanderstoßen können, sich aber dennoch ein Spreizwerkzeug in die Aussparungen 10 einführen läßt, sind bei der Abwandlung des Federbandes 3 nach den Fig. 5 und 6 die Aussparungen 10 weggelassen, so daß der Schlitz 9 im gespannten Zustand des Federbandes 3, während es an den Rohrstutzen 1, 2 anliegt, nicht völlig geschlossen, sondern etwa bis zu 2 mm breit ist, so daß z.B. die Klinge eines Schraubendrehers zum Aufspreizen des Federbandes leicht in den Schlitz 9 eingeführt werden kann.

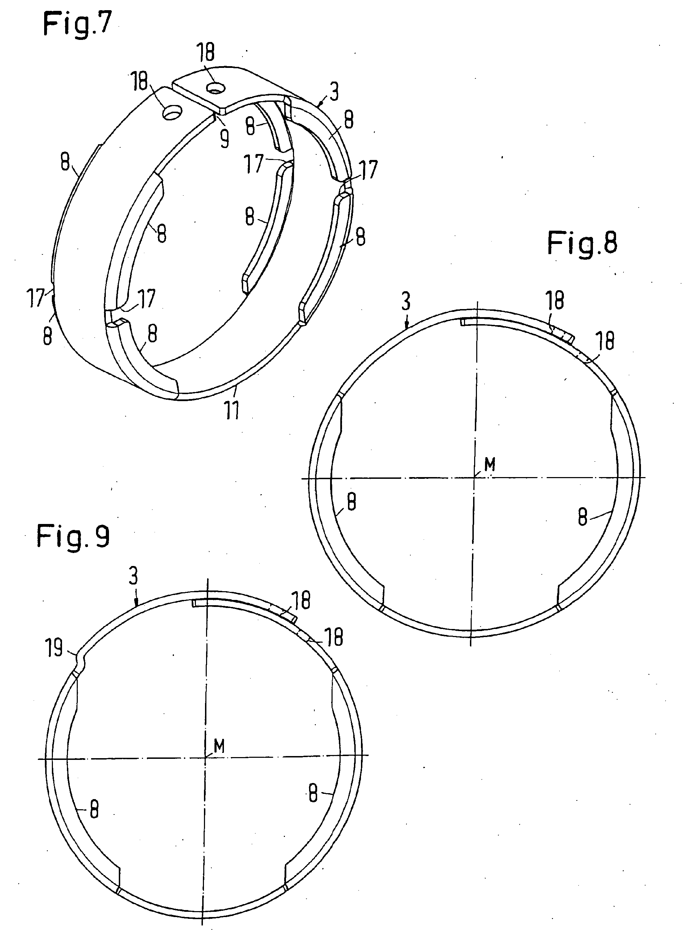

Das Federband 3 nach Fig. 7 unterscheidet sich von dem nach Fig. 4 dadurch, daß alle Flansche 8 mit einer Aussparung 17 versehen sind, in die jeweils ein radialer Vorsprung an dem in dieses Ende eingeführten Rohrstutzen eingeführt werden kann, um das Federband 3 relativ zu beiden Rohrstutzen 1, 2 in einer vorbestimmten Drehwinkellage montieren zu können. Zusätzlich sind in der Nähe der Umfangsenden des Federbandes 3 radial durchgehende Löcher 18 ausgebildet, die zur Einführung eines Spreizwerkzeugs, z.B. einer Spreizzange, dienen. Die bei dem Federband 3 nach Fig. 4 vorgesehenen Aussparungen 10 sind daher entfallen. Dennoch können die Umfangsenden des Federbandes 3 im eingekuppelten Zustand der Rohrstutzen 1, 2 entsprechend der Weite des Schlitzes getrennt sein. Alternativ kann das Federband 3 so bemessen sein, daß seine Umfangsenden im eingekuppelten Zustand der Rohrstutzen 1, 2 aneinander anliegen und das Federband 3 die Rohrstutzen 1, 2 fest umschließt.

Das Federband 3 nach Fig. 8 unterscheidet sich von dem nach Fig. 4 dadurch, daß sich Endabschnitte des Federbandes 3 im eingekuppelten Zustand der Rohrstutzen 1, 2 überlappen und ebenfalls mit Löchern 18 zur Einführung eines Spreizwerkzeugs versehen sind. Die Überlappung dient dazu, daß man sich beim Ein- oder Auskuppeln der Rohrstutzen 1, 2 nicht ein Teil der Hand in dem bei den vorstehend beschriebenen Federbändern vorgesehenen Schlitz 9 einklemmt. Darüber hinaus kann das Federband 3 auch unabhängig von unterschiedlichen Maßtoleranzen den Dichtungsspalt zwischen den Rohrstutzen mit höherer Sicherheit völlig abdecken, um das Eindringen von Verschmutzungen und Flammen im Brandfall zu verhindern.

Das Federband 3 nach Fig. 9 unterscheidet sich von dem nach Fig. 8 nur dadurch, daß der äußere Endabschnitt des Federbandes eine Abkröpfung 19 entsprechend der Dicke des Federbandes 3 aufweist. Diese Abkröpfung 19 verhindert, daß mit höherer Sicherheit kein Spalt zwischen den sich überlappenden Endabschnitten entsteht, wenn sich das Federband zusammenzieht.

Die Überlappung nach den Fig. 8 und 9 kann auch bei den vorstehend und nachfolgend beschriebenen Federbändern 3 vorgesehen sein.

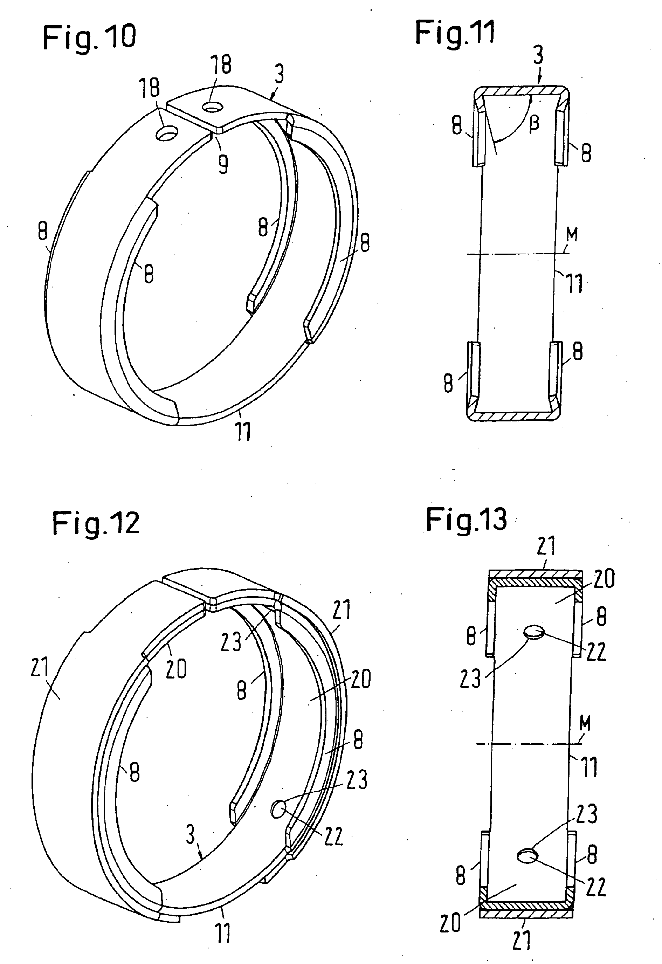

Das Federband 3 nach den Fig. 10 und 11 unterscheidet sich von dem nach Fig. 7 dadurch, daß die Flansche 8 beiderseits des Gelenks 11 bzw. des Schlitzes 9 nicht unterbrochen sind, aber mit dem die Flansche 8 verbindenden axial mittleren Bereich des Federbandes 3 einen Winkel β einschließen, der kleiner als der 90°-Winkel der vorstehend und nachfolgend beschriebenen Federbänder 3 ist und im Bereich von 15° bis 85°, vorzugsweise von 15° bis 75°, liegt. Dargestellt ist ein Winkel β von 75°. Der Winkel β erleichtert nicht nur das Einstecken der Rohrstutzen 1, 2 in das Federband 3, sondern erhöht auch die Steifigkeit der Flansche 8 gegen ein Aufbiegen unter dem Innendruck der Verbindungsanordnung.

Bei dem Federband 3 nach den Fig. 12 und 13 sind auf der radial äußeren Seite von Umfangsendabschnitten 20 des Federbandes 3 Abdeckungen 21 aus Kunststoff formschlüssig befestigt. Zu diesem Zweck sind radial nach innen ragende Vorsprünge 22 der Abdeckungen 21 in Löcher 23 der Umfangsendabschnitte 20 des Federbandes 3 eingerastet. Diese Abdeckungen 21 schützen das Federband 3 weitgehend vor Stoßbelastungen.

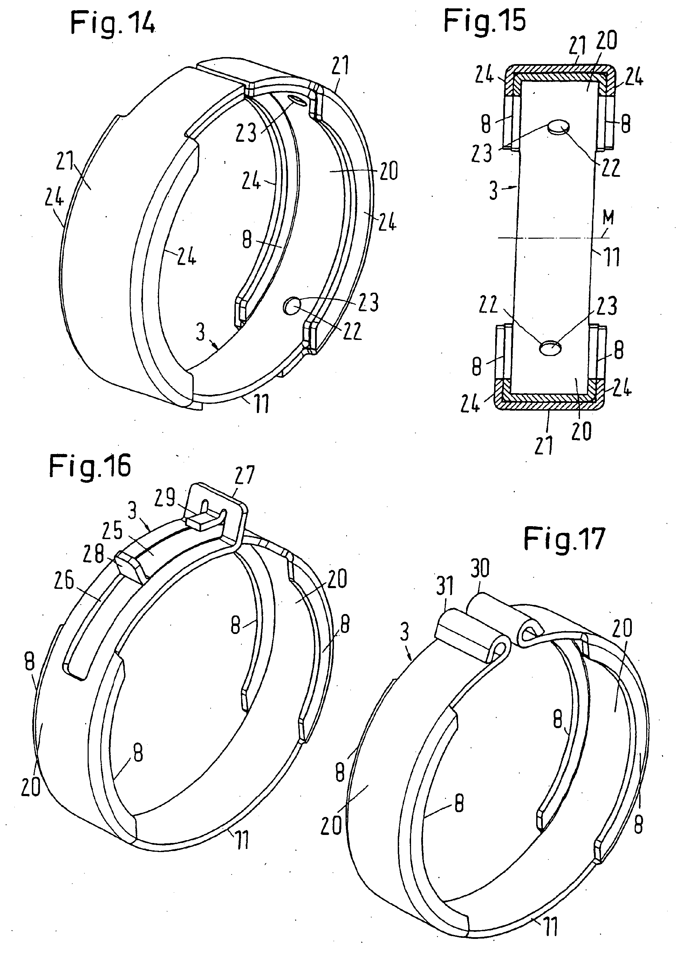

Während die Abdeckungen 21 nach den Fig. 12 und 13 die Flansche 8 des Federbandes 3 nicht abdecken, sind bei dem Federband 3 nach den Fig. 14 und 15 die Flansche 8 ebenfalls durch radiale Flansche 24 der Abdeckungen 21 abgedeckt.

Bei dem Federband 3 nach Fig. 16 erstreckt sich der eine Umfangsendabschnitt 20 des Federbandes mit einem schmaleren Endstück 25 in einen Umfangsschlitz 26 des anderen Umfangsendabschnitts 20 des Federbandes 3. Ferner sind die Umfangsendabschnitte 20 des Federbandes 3 jeweils mit einem von der Außenseite des Federbandes 3 weg gerichteten Vorsprung 27 bzw. 28 zum Ansetzen eines Spreizwerkzeugs versehen. Diese Vorsprünge 27, 28 sind durch Umbiegen der Enden der Umfangsendabschnitte des Federbandes 3 gebildet. Zusätzlich ist der Vorsprung 27 mit einer an dem einen Ende des Schlitzes 26 abgebogenen Zunge 29 versehen, die an dem Vorsprung 28 in der maximalen Aufspreizlage des Federbandes 3 anschlägt und damit den Aufspreizweg begrenzt. Das Federband 3 entspricht, bis auf die Flansche 8, einer herkömmlichen Federbandschelle und kann daher in gleicher Weise wie dieses mit ähnlichen Werkzeugen und aus dem gleichen Material hergestellt werden. Ferner ergibt sich durch das sich in den Schlitz 26 erstreckende Endstück 25 ebenfalls eine Überlappung der Umfangsendabschnitte 20 in ähnlicher Weise wie bei den Federbändern 3 nach den Fig. 8 und 9. Die Vorsprünge 27 und 28 wirken in gleicher Weise wie bei einer herkömmlichen Federbandschelle als Spreizbacken.

Das Federband 3 nach Fig. 17 unterscheidet sich von dem nach Fig. 16 dadurch, daß die freien Enden des Federbandes zu weitgehend hohlzylindrischen Vorsprüngen 30, 31 auf die Endabschnitte 20 zurückgebogen sind und ebenfalls als Spreizbacken zum Ansetzen eines Spreizwerkzeugs entweder zwischen den Vorsprüngen 30, 31 oder in ihre Hohlräume dienen. Sie wirken daher gleichermaßen als Spreizbacken. Die Vorsprünge 27 und 28 bei dem Federband 3 nach Fig. 16 können ebenso weitgehend hohlzylindrisch wie die Vorsprünge 30, 31 bei dem Federband nach Fig. 17 umgebogen sein, wobei sich das Endstück 25 des Federbands nach Fig. 16 weiterhin durch den Schlitz 26 erstrecken kann.

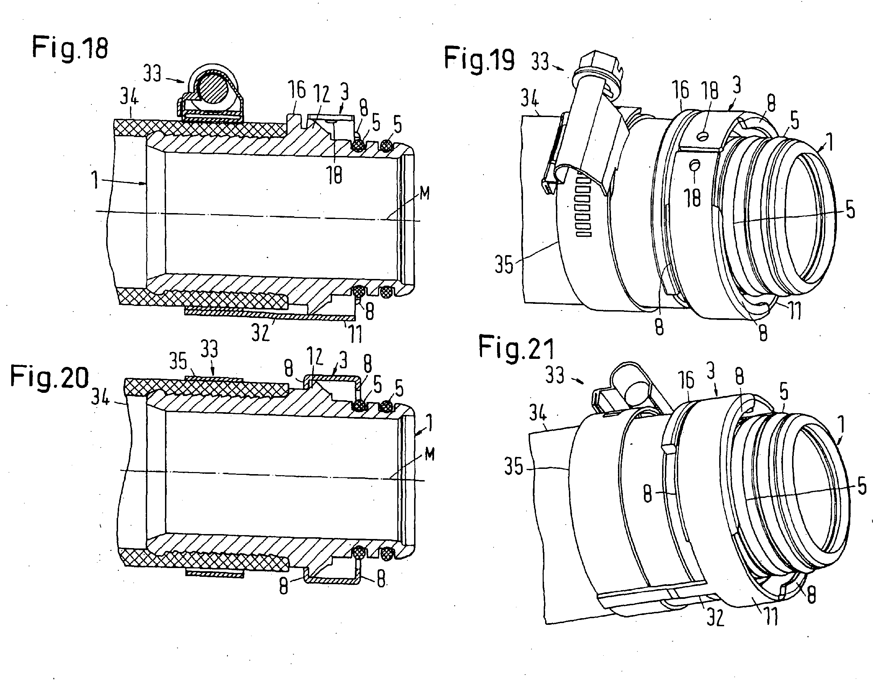

Bei dem Ausführungsbeispiel der Verbindungsanordnung nach den Fig. 18 bis 21 ist das auf dem Rohrstutzen 1 vormontierte Federband 3, das ebenso ausgebildet ist wie das Federband 3 nach Fig. 10, jedoch mit einem Winkel β gemäß Fig. 11 von 90°, durch einen einstückig mit dem Federband 3 ausgebildeten Steg 32 mit einer herkömmlichen Schlauchschelle 33, hier einer Schneckengewindeschelle, verbunden, durch die eine Fluidleitung 34 in Form eines elastischen Kunststoff- oder Gummischlauches mit dem Rohrstutzen 1 verbunden ist. Die Verbindung zwischen dem Steg 32 und dem Spannband 35 der Schlauchschelle 33 kann eine Schweißverbindung, z.B. Punktschweißverbindung, oder eine formschlüssige Verbindung sein.

Nachdem das Spannband 3 in der beschriebenen Weise zusammen mit der Schlauchschelle 33 auf dem Rohrstutzen 1 vormontiert worden ist, wird die Fluidleitung 34 bei noch geöffneter Schlauchschelle 33 auf den gerippt dargestellten Endabschnitt des Rohrstutzens 1 geschoben und dann die Schlauchschelle 33 gespannt, so daß sie die Fluidleitung 34 auf dem Rohrstutzen festklemmt.

Diese Ausbildung hat den Vorteil, daß das Federband 3 und die Schlauchschelle 33 auf dem Rohrstutzen 1 vormontiert zur Endmontage an einen Automobilhersteller geliefert werden können, wo dann die Endmontage durch Zusammenstecken der Rohrstutzen 1, 2 und das Anschließen der Fluidleitung auf einfache Weise durchgeführt werden können.

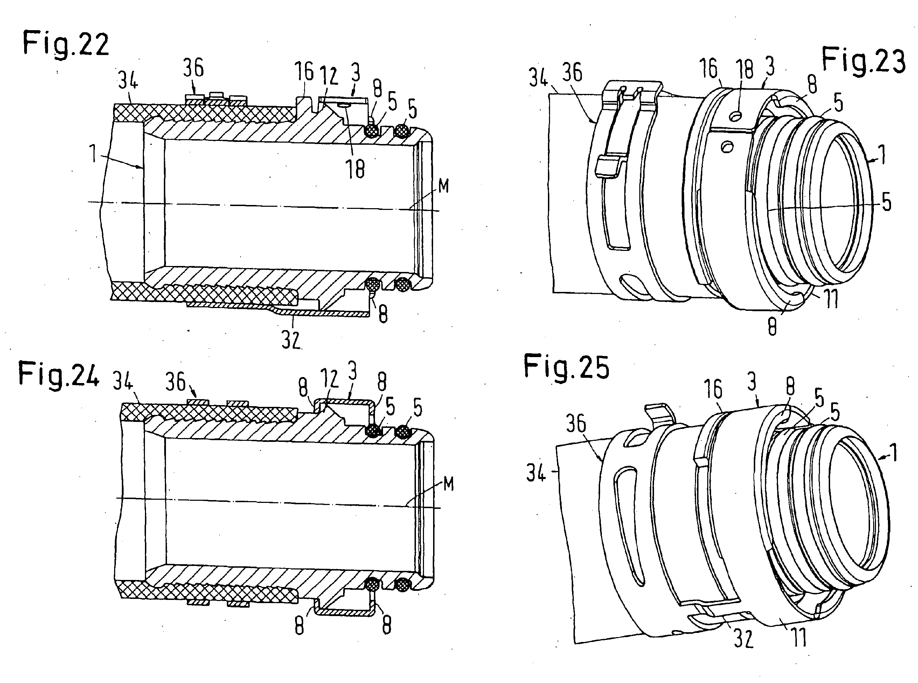

Die in den Fig. 22 bis 25 dargestellten Teile der Verbindungsanordnung entsprechend den in den Fig. 18 bis 21 dargestellten, nur daß als Schlauchschelle eine herkömmliche Federbandschelle 36 vorgesehen ist und das Federband 3 mit der Schlauchschelle 36 einstückig durch den Steg 32 verbunden ist. Diese Ausbildung hat den Vorteil, daß das Federband 3 und die Federbandschelle 36 einstückig und aus dem gleichen Material hergestellt werden können.

Anstelle einer Schneckengewindeschelle oder Federbandschelle kann auch eine Quetschhülse als Schlauchschelle mit dem Federband 3 durch den Steg 32 verbunden sein.

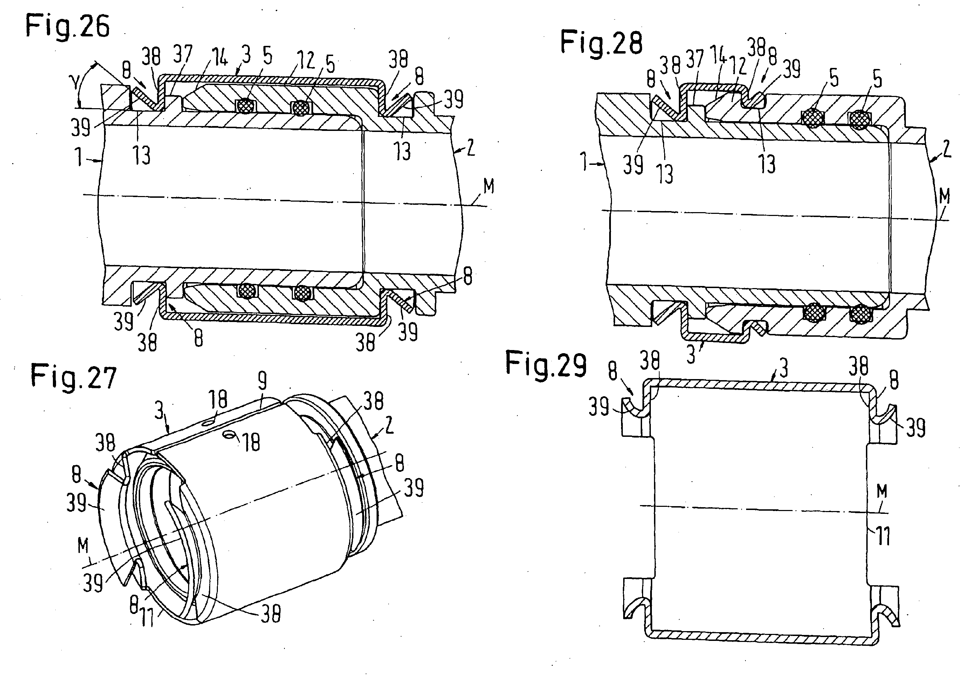

Die in den Fig. 26 und 27 dargestellte Verbindungsanordnung entspricht weitgehend der in Fig. 1 dargestellten, nur daß der Rohrstutzen 1 mit einer im Querschnitt weitgehend rechteckigen Halterippe 37 versehen ist und keine Ringnuten zur Aufnahme der Dichtringe 5 aufweist, daß die Halterippe 12 sich bis über das freie Ende des in den Rohrstutzen 2 hineingesteckten Teils des Rohrstutzens 1 hinaus erstreckt und auf ihrer Innenseite mit die Dichtringe 5 aufnehmenden Ringnuten versehen ist und daß die Flansche 8 des Federbandes 3 einen radial nach innen gebogenen Abschnitt 38 und einen schräg nach außen gebogenen Abschnitt 39 haben, wobei der schräge Abschnitt 39 mit der Mittelachse M des jeweiligen Rohrstutzens 1, 2 einen Winkel γ im Bereich von 10° bis 60° einschließt und der Durchmesser der radial inneren Kanten der radial äußeren Ränder der schrägen Abschnitte 39 größer als der der Halterippe 37 bzw. des kleinsten Durchmessers der Vorderflanke 14 der Halterippe 12 ist. Die axiale Breite wenigstens des einen Flansches 8, hier beider Flansche 8, entspricht jedoch weiterhin der Weite wenigstens der einen Nut 13, wenn nur eine vorgesehen ist.

Diese Ausbildung hat den Vorteil, daß die Flansche 8 des Federbandes 3 beim Zusammenstecken der Rohrenden 1, 2 nicht über die Dichtringe 5 hinweggleiten, aber auch die mit den Dichtringen 5 zusammenwirkende Dichtfläche des Rohrstutzens 1 beim Zusammenstecken der Rohrstutzen 1, 2 weitgehend nicht durch die radial inneren Ränder der Flansche 8 beschädigt werden, weil diese Ränder weitgehend rund und nicht scharfkantig sind. Die radial inneren Kanten der radial äußeren Ränder der schrägen Abschnitte 39 haben einen größeren Durchmesser als zum einen die Halterippe 37 und zum anderen der kleinste Umkreis der Vorderflanke 14 der Halterippe 12. Die schrägen Abschnitte 39 gleiten daher beim Zusammenstecken der Rohrstutzen 1, 2 einerseits über die der Flanke 14 abgekehrte Kante der Halterippe 37 und andererseits über die der Halterippe 37 zugekehrte radial innere Kante der Vorderflanke 14 leicht hinweg. Wie Fig. 27, in der der Rohrstutzen 1 nicht dargestellt ist, deutlicher zeigt, sind die schrägen Abschnitte 39 konisch.

Die Verbindungsanordnung nach Fig. 28 unterscheidet sich von der nach den Fig. 26 und 27 nur dadurch, daß die in den Fig. 26 und 27 rechts dargestellte Nut 13 unmittelbar, ebenso wie bei der Verbindungsanordnung nach Fig. 1, neben einer axial kürzeren Halterippe 12 des Rohrstutzens 2 und nur ebenso tief wie die Nuten 13 nach Fig. 1 ausgebildet ist, so daß das Spannband 3 der Verbindungsanordnung nach Fig. 28 wesentlich schmaler als das Spannband 3 der Verbindungsanordnung nach den Fig. 26 und 27 ausgebildet werden kann.

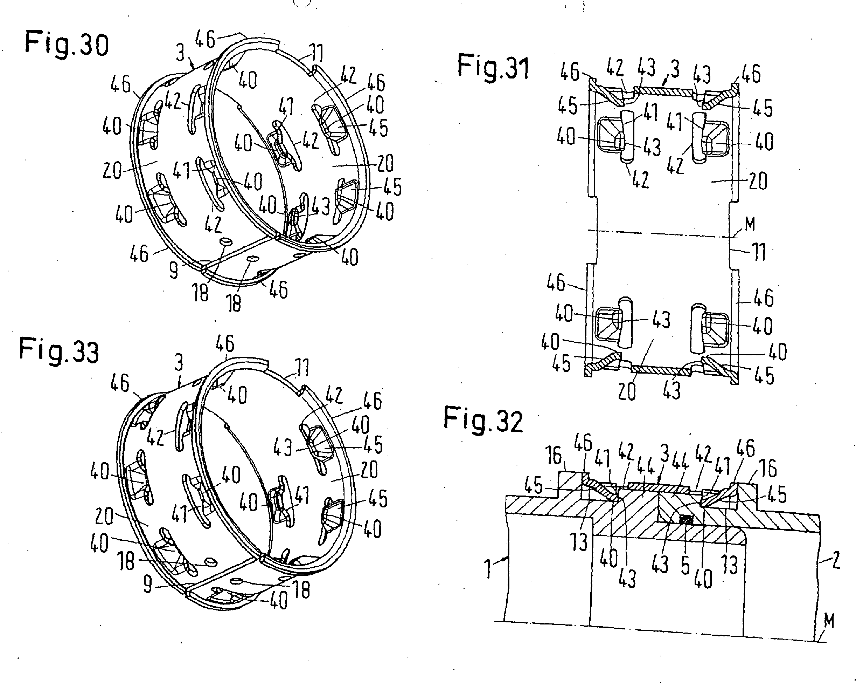

Fig. 29 stellt ein Federband 3 dar, das gegenüber dem nach den Fig. 26 bis 28 insofern abgewandelt ist, als die schrägen Abschnitte 39 gerundet sind, so daß der radial innere Rand der Flansche 8 stärker gerundet ist. Bei dem in den Fig. 30 bis 32 dargestellten erfindungsgemäßen Federband 3 sind anstelle der Flansche 8 radial nach innen gerichtete Vorsprünge 40 in Form von Rastnasen aus den Umfangsendabschnitten 20 des Federbandes 3 in zwei parallelen Radialebenen nahe den axialen Enden des Federbandes 3 herausgedrückt. Die Vorsprünge 40 sind jeweils an dem einen Rand 41 von in ihrer Länge begrenzten Umfangsschlitzen 42 des Federbandes 3 herausgedrückt. Die Umfangsschlitze 42 sind Langlöcher mit jeweils einer im ebenen Zustand des Federbandes quer zum Langloch gerichteten Lasche, deren Rand die in dem aus dem Federband 3 herausgedrückten Zustand des Vorsprungs 40 eine radiale Anlagefläche 43 zur Anlage an jeweils einer der Halterippen 44 bildet. Statt im Querschnitt viereckig können die Halterippen 44 aber auch etwa dreieckig mit einer schrägen Vorderflanke, wie die Vorderflanke 14 der Halterippen 12 nach Fig. 1, ausgebildet sein. Die Vorsprünge 40 haben ebenfalls eine schräge Auflauffläche 45, mit der sie über die radial äußeren, einander zugekehrten Kanten der Halterippen 44 beim Einstecken der Rohrstutzen 1, 2 in das Federband 3 hinweggleiten, bis sie hinter den Rückflanken der Halterippen 44 in den Nuten 13 einrasten.

Die Ausbildung des Federbandes 3 mit den Vorsprüngen 40 hat den Vorteil, daß die Vorsprünge 40 relativ hohen Axialkräften standhalten, die durch den Innendruck der Rohrstutzen 1, 2 bewirkt werden. Außerdem wirkt der Druck der Anlageflächen 43 der Vorsprünge 40 praktisch nur am radial inneren Ende der Rückflanken der Halterippen 44 auf diese ein, so daß die Halterippen 44 auch bei axial schmalerer Ausbildung oder bei Ausbildung mit einer schrägen Vorderflanke am radial äußeren Rand praktisch keinen Biegekräften ausgesetzt sind. Die Form der Rohrstutzen 1, 2 mit nur zwei radial relativ kurzen, die Nuten 13 begrenzenden Flanschen 16 ermöglicht eine einfache Herstellung der Rohrstutzen 1, 2 nicht nur aus Kunststoff, sondern auch aus Metall. Auch bei dieser Ausbildung entspricht die Weite der Nuten 13 im wesentlichen der axialen Breite der Vorsprünge 40 einschließlich der Breite radial kurzer, nach außen gerichteter Versteifungsflansche 46 an den axialen Enden des Federbandes 3. Die Versteifungsflansche 46 erhöhen die Biegesteifigkeit der Umfangsendabschnitte 20, lassen jedoch die Ränder des elastisch federnden Gelenks 11 frei.

Während die Vorsprünge 40 bei dem Ausführungsbeispiel des Federbandes nach den Fig. 30 bis 32 sich axial gegenüberliegen, sind sie bei dem Federband 3 nach Fig. 33 in Umfangsrichtung zueinander versetzt. Dadurch wird die axiale Zugfestigkeit des Federbandes 3 nach Fig. 33 gegenüber der des Federbandes 3 nach den Fig. 30 bis 32 erhöht.

Abwandlungen der dargestellten Ausführungsbeispiele können beispielsweise darin bestehen, daß Merkmale der einzelnen Ausführungsbeispiele miteinander kombiniert werden.

## Patentansprüche

1. Verbindungsanordnung mit Rohrstutzen (1, 2) von zu verbindenden Fluidaufnahmeteilen, wie Fluidleitungen (34) und -behältern, wobei die Rohrstutzen (1, 2) jeweils mit einer zu ihrer Mittelachse (M) koaxialen Halterippe (12) versehen sind, hinter der eine Nut (13) ausgebildet ist und die eine zur Mittelachse (M) koaxiale, konische Vorderflanke (14) und eine radiale Rückflanke (15) aufweist, wobei die Vorderflanke (14) der einen Halterippe (12) der Vorderflanke (14) der anderen Halterippe (12) gegenüberliegt und die Rückflanke (15) wenigstens der einen Halterippe (12) die eine Wand der angrenzenden Nut (13) bildet, und mit einem über mehr als 240° weitgehend kreisförmig gebogenen Federband (3) aus Stahl, dessen axiale Enden nach innen gerichtete Flansche (8) mit weitgehend kreisbogenförmiger, zur Mittelachse (M) koaxialer Innenkante aufweisen, die hinter den Halterippen (12) eingreifen und wenigstens auf der den Umfangsenden des Federbandes (3) gegenüberliegenden Seite des Federbandes (3') unterbrochen sind, und wobei die Rohrstutzen (1, 2) teilweise ineinandergesteckt sind und die ineinandergesteckten Teile der Rohrstutzen (1, 2) durch wenigstens einen Dichtring (5) gegeneinander abgedichtet sind, **dadurch gekennzeichnet, daß** das Federband (3) durch einen Steg (32) mit einer Schlauchschelle (33, 36) zum Festklemmen einer Fluidleitung (34) auf einem der Rohrstutzen verbunden ist.

2. Verbindungsanordnung mit Rohrstutzen (1, 2) zu verbindender Fluidaufnahmeteile, wie Fluidleitungen (34) oder -behälter, wobei die Rohrstutzen (1, 2) jeweils mit einer zu ihrer Mittelachse (M) koaxialen Halterippe (1; 2) mit radialer Rückflanke (15) versehen sind, wobei die Rückflanke (15) wenigstens einer der Halterippen (12) eine Nut (13) begrenzt, und mit einem über wenigstens 240° weitgehend kreisförmig gebogenen Federband (3) aus Stahl, dessen axiale Enden nach innen gerichtete Flansche (8) mit weitgehend kreisbogenförmiger, zur Mittelachse (M) koaxialer Innenkante aufweisen, die hinter den Halterippen (12) eingreifen und wenigstens auf der den Umfangsenden des Federbandes (3) gegenüberliegenden Seite des Federbandes (3) unterbrochen sind, und wobei die Rohrstutzen (1, 2) teilweise ineinandergesteckt sind und die ineinandergesteckten Teile der Rohrstutzen (1, 2) durch wenigstens einen Dichtring (5) gegeneinander abgedichtet sind, **dadurch gekennzeichnet, daß** das Federband (3) durch einen Steg (32) mit einer Schlauchschelle (33, 36) zum Festklemmen einer Fluidleitung (34) auf einem der Rohrstutzen verbunden ist.

## Claims

1. Coupling assembly comprising pipe sockets (1, 2) of fluid-holding parts to be joined, such as fluid lines (34) and tanks, the pipe sockets (1, 2) each being provided with a locking rib (12), which is coaxial with a central axis (M) of the pipe sockets and behind which a groove (13) is formed and which has a conical front flank (14), coaxial with the central axis (M), and a radial rear flank (15), the front flank (14) of one locking rib (12) being located opposite the front flank (14) of the other locking rib (12), and the rear flank (15) of at least one locking rib (12) forming one wall of the adjacent groove (13), and comprising a steel spring band (3) which is largely circularly curved over more than 240°, the axial ends of which have inwardly directed flanges (8), which have a largely arc-shaped inner edge coaxial with the central axis (M), engage the locking ribs (12) from behind, and are interrupted at least on the side of the spring band (3) opposite the circumferential ends of the spring band (3), and the pipe sockets (1, 2) being partially fitted into one another and the parts which are fitted into one another of the pipe sockets (1, 2) being sealed from one another by at least one gasket (5), **characterised in that** the spring band (3) is connected by a web (32) to a hose clip (33, 36) to clamp a fluid line (34) onto one of the pipe sockets.

2. Coupling assembly comprising pipe sockets (1, 2) of fluid-holding parts to be joined, such as fluid lines (34) or tanks, the pipe sockets (1, 2) each being provided with a locking rib (1; 2), which is coaxial with a central axis (M) of the pipe sockets and which has a radial rear flank (15), the radial rear flank (15) of at least one of the locking ribs (12) delimiting a groove (13), and comprising a steel spring band (3) which is largely circularly curved over at least 240°, the axial ends of which have inwardly directed flanges (8), which have a largely arc-shaped inner edge coaxial with the central axis (M), engage the locking ribs (12) from behind, and are interrupted at least on the side of the spring band (3) opposite the circumferential ends of the spring band (3), and the pipe sockets (1, 2) being partially fitted into one another and the parts which are fitted into one another of the pipe sockets (1, 2) being sealed from one another by at least one gasket (5), **characterised in that** the spring band (3) is connected by a web (32) to a hose clip (33, 36) to clamp a fluid line (34) onto one of the pipe sockets.

## Revendications

1. Agencement de liaison doté de raccords tubulaires (1, 2) d'éléments de réception de fluides qu'il s'agit de relier, comme des conduits à fluides (34) et des récipients à fluides, dans lequel les raccords tubulaires (1, 2) sont respectivement pourvues d'une nervure de maintien (12) coaxiale à leur axe médian (M), derrière laquelle est ménagée une rainure (13) qui comporte un flanc antérieur conique (14) coaxial à l'axe médian (M), et un flanc postérieur radial (15), dans lequel le flanc antérieur (14) de l'une des nervures de maintien (12) est à l'opposé du flanc antérieur (14) de l'autre nervure de maintien (12), et le flanc postérieur (15) de l'une au moins des nervures de maintien (12) forme l'une des parois de la rainure adjacente (13), et comprenant un ruban-ressort (3) en acier, cintré sous forme globalement circulaire sur plus de 240°, dont les extrémités axiales comportent des brides (8) dirigées vers l'intérieur avec une arête intérieure de forme globalement circulaire et coaxiale à l'axe médian (M), lesdites brides s'engageant derrière les nervures de maintien (12) et étant interrompues au moins sur le côté du ruban-ressort (3) opposé aux extrémités périphériques du ruban-ressort (3), et dans lequel les raccords tubulaires (1, 2) sont partiellement enfilés l'un dans l'autre, et les parties enfilées l'une dans l'autre des raccords tubulaires (1, 2) sont rendues étanches l'une par rapport à l'autre par au moins une bague d'étanchéité (5),
**caractérisé en ce que** le ruban-ressort (3) est relié par une barrette (32) à un collier de serrage de tuyau (33, 36) pour serrer fermement une conduite à fluide (34) sur l'un des raccords tubulaires.

2. Agencement de liaison doté de raccords tubulaires (1, 2) d'éléments de réception de fluides qu'il s'agit de relier, comme des conduits à fluides (34) ou un récipient à fluides, dans lequel les raccords tubulaires (1, 2) sont respectivement pourvues d'une nervure de maintien (1 ; 2) coaxiale à leur axe médian (M) avec flanc postérieur (15) radial, le flanc postérieur (15) de l'une au moins des nervures de maintien (12) délimitant une rainure (13), et comprenant un ruban-ressort en acier (3) cintré sous forme globalement circulaire sur au moins 240°, dont les extrémités axiales comportent des brides (8) dirigées vers l'intérieur avec une arête intérieure de forme globalement circulaire et coaxiale à l'axe médian (M), lesdites brides s'engageant derrière les nervures de maintien (12) et étant interrompues au moins sur le côté du ruban-ressort (3) opposé aux extrémités périphériques du ruban-ressort (3), et dans lequel les raccords tubulaires (1, 2) sont partiellement enfilés l'un dans l'autre et les partis enfilées l'une dans l'autre des raccords tubulaires (1, 2) sont rendues étanches l'une par rapport à l'autre par au moins une bague d'étanchéité (5),
**caractérisé en ce que** le ruban-ressort (3) est relié par une barrette (32) à un collier de serrage de tuyau (33, 36) pour serrer fermement un conduit à fluide (34) sur l'un des raccords tubulaires.
